# EUROPÄISCHE PATENTSCHRIFT

(11) **EP 2 718 135 B1**
(45) Veröffentlichungstag und Bekanntmachung des Hinweises auf die Patenterteilung: **27.02.2019**
(21) Anmeldenummer: 12725399.5
(22) Anmeldetag: 01.06.2012
(51) Int. Cl.: B60K 28/14, F02D 41/30, F02M 37/08, F02M 63/02, B60R 21/0134, B60R 21/0136

(54) **VERFAHREN UND STEUERUNGSSYSTEM ZUM SCHNELLEN UND SICHEREN ANSTEUERN VON KRAFTSTOFFPUMPEN**
METHOD AND CONTROL SYSTEM FOR A FAST AND SECURE CONTROL OF FUEL PUMPS
PROCEDE ET SYSTEME POUR UNE COMMANDE RAPIDE ET SECURE D'UNE POMPE DE CARBURANT

(30) Priorität: 08.06.2011 DE 102011077192
(43) Veröffentlichungstag der Anmeldung: 16.04.2014
(73) Patentinhaber: Bayerische Motoren Werke Aktiengesellschaft, 80809 München (DE)
(72) Erfinder: BAUR, Richard, 85276 Pfaffenhofen (DE); WEIDNER, Marcus, 82362 Weilheim (DE); SCHILLING, Simon, 80469 München (DE); ACHATZ, Klaus, 82205 Gilching (DE)
(86) Internationale Anmeldenummer: PCT/EP2012/060349
(87) Internationale Veröffentlichungsnummer: WO 2012/168145

(56) Entgegenhaltungen:
- DE-A1- 2 261 954
- DE-A1-102008 040 038
- DE-B4-112004 000 890
- US-A- 5 797 111
- US-A1- 2007 203 615
- US-A1- 2007 240 684

## Beschreibung

Die Erfindung betrifft ein Verfahren und eine Vorrichtung zum schnellen und sicheren Ansteuern von Kraftstoffpumpen. Insbesondere betrifft die Erfindung ein Verfahren und eine Vorrichtung zum schnellen und sicheren Ansteuern von elektronischen Kraftstoffpumpen für ein Kraftfahrzeug im Falle eines Fahrzeug-Crashs.

Kraftstoffpumpen kommen in Einspritzsystemen von Verbrennungsmotoren zum Einsatz und dienen dazu den für die Verbrennung vorgesehenen Kraftstoff aus einem Tank zu fördern und dem Verbrennungsmotor über ein druckbeaufschlagtes Versorgungssystem zur Verbrennung zuzuführen.

In aktuellen Kraftfahrzeugen finden insbesondere elektronische Kraftstoffpumpen Anwendung. Diese sind elektronisch geregelt und stellen bedarfsgerecht die aktuell erforderliche Menge Kraftstoff für die Verbrennung bereit. Hierzu erhalten die Kraftstoffpumpen beispielsweise über den CAN-Bus des Fahrzeugs Signale bzw. Informationen zu dem aktuellen Kraftstoffbedarf, so dass die entsprechende Regelung der Kraftstoffpumpe zum Fördern der aktuellen Kraftstoffmenge erfolgen kann. Üblicherweise werden die Signale bzw. die Informationen von dem Fahrzeugantrieb bzw. dessen Steuergerät bereitgestellt und an die Kraftstoffpumpe weitergeleitet.

Im Falle eines Unfalls des Fahrzeugs, insbesondere bei einem Crash, besteht die Gefahr, dass Kraftstoff aus dem druckbeaufschlagten Versorgungssystem aufgrund von Beschädigungen oder Lecks austreten und durch Hitzeeinwirkung entzündet werden kann. Um eine hieraus resultierende akute Brandgefahr zu reduzieren, ist es bekannt die elektronische Kraftstoffpumpe im Falle eines Crashs über ein Crash-Signal eines Crash-Erkennungssystems abzuschalten, um eine Kraftstoffförderung einzustellen. Eine derartige Abschaltung erfolgt beispielsweise über ein Motorsteuergerät, welches ein Kraftstoffpumpenrelais in Reaktion auf ein entsprechendes Crash-Signal ansteuern kann.

Aus dem Stand der Technik sind verschiedene Systeme zum Abschalten einer Kraftstoffpumpe bekannt. So beschreibt DE 198 41 659 A1 ein Verfahren zur Steuerung einer Kraftstoffpumpe für ein Kraftfahrzeug, bei dem die Kraftstoffpumpe durch das Motorsteuergerät unfallbedingt aufgrund eines Crash-Signals abgeschaltet werden kann.

Aus der DE 38 40 912 A1 ist eine Kraftstoffversorgung für ein Kraftfahrzeug bekannt, die unter anderem eine Sicherheitseinrichtung zum selbständigen Deaktivieren einer Kraftstoffpumpe im Crashfall beschreibt, wobei die Sicherheitseinrichtung hierzu crashbedingte Kräfte nutzt.

Den bekannten Systemen zum Abschalten der Kraftstoffpumpe ist jedoch gemein, dass ein Abschaltsignal erst nach einer Erkennung eines tatsächlichen physischen Crash-Ereignisses generiert und zum Abschalten der Kraftstoffpumpe an diese übermittelt wird.

Die Erkennung einer tatsächlichen Crash-Situation erfolgt entsprechend den allgemein bekannten Verfahren und Vorrichtungen. Da diese Erkennung jedoch keine einfache binäre Entscheidung ist, sondern sich erst aufbauende Belastungen und Verzögerungen ausgewertet werden, vergeht wertvolle Zeit, bis eine Entscheidung getroffen ist, ob eine tatsächliche Crash-Situation vorliegt oder nicht. Wird ein positives Ergebnis ermittelt, so erfolgt eine Auslösung bestimmter Sicherheitssysteme, wie beispielsweise der Airbags.

Die bekannten Systeme weisen daher die Eigenschaft auf, dass eine Zeitdauer von Beginn des Crashs, also dem tatsächlichen ersten berührenden Kontakt des Fahrzeugs mit einem Hindernis, bis zum Versenden des Abschaltsignals prinzipbedingt relativ lange dauert. Ein beispielhafter Erfahrungswert für diesen Zeitraum liegt bei ca. 80ms. Zusätzlich entstehen bis zum Empfang des Abschaltsignals in der elektronischen Kraftstoffpumpe weitere zeitliche Verzögerungen, unter anderem aufgrund systembedingter Latenzzeiten. Ein ebenfalls lediglich beispielhafter Erfahrungswert liegt hierfür bei einer zusätzlichen Zeitdauer von ca. 100ms, so dass sich eine Gesamtdauer von ca. 180ms ergibt, um einen Crash zu erkennen und ein hierauf basierendes Abschaltsignal bzw. ein hieraus generiertes Signal bis zu der elektronischen Kraftstoffpumpe weiterzuleiten.

Da ein Crash eines Fahrzeugs bereits in sehr kurzer Zeit, beispielsweise 200ms, zu erheblichen Zerstörungen führt, kann bei einem Crash nicht ausgeschlossen werden, dass die Kraftstoffleitungen beschädigt und undicht werden, sodass bereits Kraftstoff austreten kann, bevor die Abschaltung der Kraftstoffpumpe durchgeführt wird. Zusätzlich kann nicht ausgeschlossen werden, dass aufgrund des Crashs, insbesondere bei den hierbei entstehenden Zerstörungen und aufgrund eindringender Gegenstände oder Bauteile (Intrusionen) eine kommunikationstechnische Verbindung zu der Kraftstoffpumpe unterbrochen wird, so dass das an die Kraftstoffpumpe gesendete Abschaltsignal diese nicht mehr erreichen kann und folglich eine Abschaltung unterbleibt.

Dies gilt in besonderer Weise für einen Seitencrash, da in diesem Fall in deutlich kürzeren Zeiträumen erhebliche Zerstörungen und Intrusionen auftreten können, welche zu der beschriebenen Beschädigung der Kraftstoffleitung sowie einer Unterbrechung einer Ansteuerung der Kraftstoffpumpe führen können.

Tritt dieser Fall auf, ist es weder möglich ein Abschaltsignal noch ein anderes Signal an die Kraftstoffpumpe zu übermitteln, wie beispielsweise ein Signal zur Reduzierung der aktuellen Kraftstofffördermenge oder einer vollständigen Abschaltung.

Dies bedeutet, dass in einem tatsächlichen Crash-Fall eine Kraftstoffpumpe - soweit noch betriebsfähig - weiterhin Kraftstoff fördert, so dass dieser freigesetzt wird und eine Brandgefahr verschärft bzw. ein Brand gefördert wird. Schlimmstenfalls bedeutet dies ein Leerpumpen des Kraftstofftanks des Fahrzeugs.

Zwar weisen elektronische Kraftstoffpumpen eine Rückfallebene auf, die einen definierten Fördermengenwert für den Fall vorgibt, dass ein Steuersignal zur Information über die aktuell zu fördernde Kraftstoffmenge ausbleibt, doch ist dieser üblicherweise auf einen Fördermengenwert definiert, der einer Öffnungsstellung der Kraftstoffpumpe entspricht. Dies hat den Hintergrund, dass ein Abschalten der Kraftstoffpumpe bei (kurzzeitig) ausbleibendem Signal, beispielsweise aufgrund eines Fehlers in den signalerzeugenden oder -übertragenden Bauteilen, verhindert werden soll. Auf diese Weise kann zwar eine Ausfallwahrscheinlichkeit im Falle dieser Störung gesenkt werden, jedoch wird gleichzeitig in einer Crash-Situation - wie beschrieben - weiterhin Kraftstoff gefördert. Eine gegenteilige Definition des in der Rückfallebene definierten Fördermengenwertes entsprechend einer Schließstellung würde im Gegensatz dazu zwar den Förderbetrieb in der Crash-Situation unterbinden, bei ausbleibenden Signalen jedoch zu einem unfreiwilligen Stopp des Fahrzeugs aufgrund der unbeabsichtigten Abschaltung des Kraftstoffpumpe führen.

Es besteht folglich aus dem Stand der Technik ein Konflikt bei der Definition der Rückfallebene zwischen einer Ausfallsicherheit mit einer möglichst großen Kraftstofffördermenge unter dem Gesichtspunkt einer Zuverlässigkeit des Fahrzeugs einerseits und einer Sicherheit in einem Crashfall mit einer möglichst kleinen Fördermenge andererseits. Es liegen also sich widersprechende Anforderungen vor, so dass je nach Konfiguration entweder ein Sicherheitsrisiko oder ein Verfügbarkeitsrisiko besteht.

Es ist daher Aufgabe der Erfindung, die genannten Nachteile zu überwinden bzw. zu reduzieren und insbesondere eine Ansteuerung einer Kraftstoffpumpe bereitzustellen, die beiden Aspekten, also sowohl eine hohe Verfügbarkeit einerseits als auch eine bestmögliche Sicherheit im Falle eines Unfalls andererseits, gerecht wird.

Diese Aufgabe wird erfindungsgemäß gelöst mit einem Verfahren zum schnellen und sicheren Ansteuern einer Kraftstoffpumpe gemäß Anspruch 1 und einem Steuerungssystem für eine elektronische Kraftstoffpumpe gemäß Anspruch 6.

Vorteilhafte Ausgestaltungen ergeben sich aus den Unteransprüchen.

Demnach wird ein Verfahren zum schnellen und sicheren Ansteuern einer Kraftstoffpumpe mit einer definierbaren Rückfallebene für eine Fördermenge der Kraftstoffpumpe, mit den folgenden Schritten vorgeschlagen:
- Erkennen einer möglichen Crash-Situation,
- Definieren der Rückfallebene auf einen ersten Fördermengenwert, der einer Schließstellung der Kraftstoffpumpe zugeordnet ist, in Reaktion auf die erkannte mögliche Crash-Situation.

Das beschriebene Verfahren ermöglicht also eine Rückfallebene einer Kraftstoffpumpe, insbesondere einer elektronischen Kraftstoffpumpe, nicht pauschal vorab auf einen unveränderlichen Wert zu definieren, sondern bedarfsabhängig eine geeignete Definition vorzunehmen. Ein Bedarf besteht hierbei im Falle eines möglichen Crashs des Fahrzeugs.

Der Begriff der "möglichen" Crash-Situation ist derart zu verstehen, dass entweder eine Situation vorliegt, in der ein Crash noch nicht tatsächlich stattgefunden hat, sondern lediglich droht, oder der Crash zwar bereits stattgefunden bzw. begonnen hat, aber noch nicht von einer bekannten Crash-Erkennung als tatsächlicher Crash erkannt wurde. Mit anderen Worten: es wird in diesem Schritt erkannt, dass die Möglichkeit besteht, dass ein Crash bereits vorliegt oder unmittelbar bevorstehen könnte. Entsprechende Anzeichen für das Erkennen des möglichen Crashs werden nachfolgend detailliert beschrieben. Dem Erkennen des beschriebenen "möglichen" Crashs folgt also der Schritt des Erkennens des tatsächlichen Crashs (falls gegeben) nach.

Im Gegensatz zu der bekannten Erkennung eines tatsächlichen Crashs ist die beschriebene Erkennung einer möglichen Crash-Situation derart vorgesehen, dass die Crash-Erkennungsvorrichtung daher schon vor der Erkennung eines tatsächlichen Crashs aufgrund von erhöhten Belastungen und Verzögerungen auf einen bevorstehenden tatsächlichen Crash schließt. Aus Gründen einer möglichst optimalen Verfügbarkeit und Zuverlässigkeit des Fahrzeugs darf jedoch in diesem Fall noch keine Abschaltung der Kraftstoffpumpe erfolgen, solange noch keine tatsächliche Crash-Situation festgestellt wurde.

Wird also ein solcher möglicher Crash von einer erfindungsgemäßen Crash-Erkennungsvorrichtung erkannt, erfolgt die genannte Definition der Rückfallebene der Kraftstoffpumpe in Vorbereitung auf den nachfolgenden tatsächlichen Crash. Im Rahmen dieses Definitionsschrittes erhält die Kraftstoffpumpe ein entsprechendes Signal oder eine Information von der Crash-Erkennungsvorrichtung, so dass eine Hinterlegung des entsprechenden ersten Fördermengenwertes durchgeführt werden kann.

Dieser wird entweder von der Crash-Erkennungsvorrichtung in der Kraftstoffpumpe mittels des Signals direkt hinterlegt oder die Kraftstoffpumpe führt in Reaktion auf die Information der Crash-Erkennungsvorrichtung die Definition des Fördermengenwertes selbst durch.

Der erste Fördermengenwert ist einer Schließstellung der Kraftstoffpumpe zugeordnet, so dass bei dessen Anwendung die Kraftstoffpumpe in ihre Schließstellung gebracht und somit geschlossen wird. Dieser erste Fördermengenwert kann also beispielsweise einen Fördermengenwert von 0 Liter/min bzw. einen Öffnungsgrad oder Fördergrad der Kraftstoffpumpe von 0% beschreiben. Die Förderleistung der Kraftstoffpumpe ist daher bei Anwendung des ersten Fördermengenwertes vollständig reduziert, so dass in diesem Fall kein Kraftstoff mehr von der Kraftstoffpumpe gepumpt wird. Vorzugsweise wird die Kraftstoffpumpe somit abgeschaltet.

Selbstverständlich kann der erste Fördermengenwert ebenso abweichend definiert sein und einen Wert größer als 0 Liter/min aufweisen, falls dies gewünscht sein sollte, so dass beispielsweise eine reduzierte Förderleistung durch einen entsprechenden Wert hinterlegt wird.

Der Schritt des Definierens der Rückfallebene führt also lediglich zu einer Hinterlegung des ersten Fördermengenwertes, er hat jedoch keinen direkten Einfluss auf die aktuelle Fördermenge der Kraftstoffpumpe in einem Normalbetrieb des Fahrzeugs. Solange die Kraftstoffpumpe Signale bzw. Informationen zu einem aktuellen Bedarf der zu fördernden Kraftstoffmenge erhält, bleibt die Rückfallebene ohne Berücksichtigung. Der beschriebene Schritt des Definierens der Rückfallebene bewirkt insbesondere noch kein unmittelbares Herabsetzen der aktuellen Fördermenge. Die Kraftstoffpumpe wird also lediglich in Bereitschaft für ein späteres Abschalten versetzt. Erst im Falle ausbleibender Informationen bzw. einer fehlenden Kommunikation erkennt die elektronische Kraftstoffpumpe einen fehlerhaften Betriebszustand und greift auf die Rückfallebene bzw. den dort hinterlegten ersten Fördermengenwert zurück, der sodann zu einer Einstellung der entsprechenden Fördermenge führt.

Daher umfasst das Verfahren außerdem die folgenden Schritte:
- Erkennen einer tatsächlichen Crash-Situation, und
- Anwenden des als Rückfallebene definierten Fördermengenwertes zum Schließen der Kraftstoffpumpe in Reaktion auf die tatsächlich erkannte Crash-Situation.

Die Kraftstoffpumpe erkennt also einen fehlerhaften Betriebszustand und wird hierdurch veranlasst auf den in der Rückfallebene definierten Fördermengenwert zurückzugreifen. Wurde also aufgrund einer erkannten möglichen Crash-Situation der erste Fördermengenwert zum Schließen der Kraftstoffpumpe hinterlegt, wird durch Anwendung dieses Wertes der Förderbetrieb der Kraftstoffpumpe eingestellt.

Wird dagegen im Vorfeld keine mögliche Crash-Situation erkannt, so ist in der Rückfallebene nicht der erste Fördermengenwert hinterlegt, sondern vorzugsweise ein weiterer Fördermengenwert, der einer Öffnungsstellung der Kraftstoffpumpe entspricht, um ein unbeabsichtigtes Abschalten der Kraftstoffpumpe zu verhindern. Dies kann beispielsweise bei einem plötzlichen Ausfall einer Kommunikation der Kraftstoffpumpe aufgrund eines technischen Defekts der Fall sein. Es wird sodann der weitere Fördermengenwert angewendet, um einen weiteren Betrieb der Kraftstoffpumpe sicherzustellen. Hierzu ist der weitere Fördermengenwert vorzugsweise größer als 0 Liter/min definiert.

Da der Schritt der erfindungsgemäßen Definition der Rückfallebene dem Schritt des Erkennens einer tatsächlichen Crash-Situation vorgelagert ist, verstreicht durch diese "Vorkonditionierung" der Rückfallebene der Zeitraum zwischen einem tatsächlichen Crash-Beginn (also dem ersten berührenden Kontakt) und dem bekannten Versenden der Information zur Crashabschaltung nicht ungenutzt. Insbesondere wird mittels des beschriebenen Verfahrens eine Möglichkeit zur zuverlässigen Abschaltung für den Fall bereitgestellt, dass eine Kommunikationsverbindung zum Ansteuern der Kraftstoffpumpe aufgrund von Auswirkungen des Crashs abbricht.

Gemäß einer weiteren Ausführungsform umfasst das Verfahren außerdem die folgenden Schritte:
- Erkennen einer fehlenden Crash-Situation nach Ablauf eines definierten Zeitintervalls,
- Definieren der Rückfallebene auf einen zweiten Fördermengenwert, der einer Öffnungsstellung der Kraftstoffpumpe zugeordnet ist.

Wurde also eine mögliche Crash-Situation erkannt und die Rückfallebene in Vorbereitung auf eine tatsächliche Crash-Situation entsprechend definiert, so kann der Fall eintreten, dass kein tatsächlicher Crash nachfolgt. Es "fehlt" der "erwartete" Crash. Dies kann beispielsweise bei einem "Fehlalarm", also einer fälschlicherweise erkannten möglichen Crash-Situation oder einer nach Erkennung abgewendeten Crash-Situation, der Fall sein. In diesem Fall muss eine Rücksetzung des hinterlegten Fördermengenwertes der Rückfallebene erfolgen, um eine unbeabsichtigte Abschaltung der Kraftstoffpumpe zu verhindert. Die Rückfallebene wird also wieder umdefiniert und der zweite Fördermengenwert hinterlegt. Dieser ersetzt den ersten Fördermengenwert und ist einer Öffnungsstellung zugeordnet, so dass bei seiner Anwendung die Kraftstoffpumpe eine entsprechende Fördermenge des Kraftstoffs bereitstellt. Hierzu ist der zweite Fördermengenwert vorzugsweise einer Fördermenge größer als 0 Liter/Minute zugeordnet.

Tritt nun der Fall ein, dass die Kraftstoffpumpe eine Kommunikationsverbindung verliert und keine weiteren Informationen oder Signale erhält, so greift sie auf die Rückfallebene zurück und wendet den zweiten Fördermengenwert an, so dass eine ausreichende Kraftstoffmenge zum weiteren Betrieb des Verbrennungsmotors bereitgestellt wird und somit ein Ausfall des Fahrzeugs verhindert wird.

Eine derartige Rücksetzung des ersten Fördermengenwertes auf den zweiten Fördermengenwert kann automatisch nach Ablauf eines definierten Zeitintervalls erfolgen. Mit anderen Worten: wird eine mögliche Crash-Situation erkannt und die Rückfallebene auf den ersten Fördermengenwert definiert, also die Kraftstoffpumpe in Bereitschaft versetzt, so wird eine Zeiterfassung gestartet. Erfolgt innerhalb eines definierten Zeitintervalls keine Bestätigung eines Crashs durch das Erkennen eines tatsächlichen Crashs, kann das Erkennen der möglichen Crash-Situation als Fehlalarm eingestuft und die Rückfallebene auf den zweiten Fördermengenwert definiert werden. Dieser stellt beispielsweise einen normalen Betriebszustand des Fahrzeugs dar. Das definierte Zeitintervall kann je nach Bedarf derart gewählt werden, dass sichergestellt werden kann, dass eine Crash-Situation überstanden ist, vorzugsweise beträgt es 3 bis 20 Sekunden, höchst vorzugsweise 5 bis 10 Sekunden.

Gemäß einer anderen Ausführungsform umfasst das Verfahren außerdem die folgenden Schritte:
- Erkennen einer fehlenden Crash-Situation anhand einer Auswertung von Sensordaten,
- Definieren der Rückfallebene auf einen zweiten Fördermengenwert, der einer Öffnungsstellung der Kraftstoffpumpe zugeordnet ist.

Entsprechend der obigen Darstellung wird also eine fehlende Crash-Situation, sprich das Ausbleiben eines erwarteten Crashs bzw. ein Fehlalarm, erkannt. Im Unterschied zu der vorherstehenden Ausführungsform wird diese nicht aufgrund eines ereignislosen Ablaufens eines Zeitintervalls bestimmt, sondern durch das Erfassen und Auswerten von Sensordaten, die auf einen normalen Betriebszustand des Fahrzeugs schließen lassen. Anschließend erfolgt, wie bereits voranstehend beschrieben, ebenfalls ein Definieren der Rückfallebene auf einen zweiten Fördermengenwert, der einem normalen Betriebszustand des Fahrzeugs zugeordnet ist und eine bestimmte Fördermenge der Kraftstoffpumpe vorgibt.

Selbstverständlich können beide Ausführungsformen miteinander kombiniert werden, so dass sowohl der Ablauf eines Zeitintervalls als auch die Auswertung von Sensordaten für den Schritt des Definierens der Rückfallebene auf den zweiten Fördermengenwert herangezogen werden kann.

Eine entsprechende Auswertung von Sensordaten, die als Indikatoren für einen normalen Betriebszustand des Fahrzeugs herangezogen werden können, umfassen beispielsweise eine benutzergesteuerte Beschleunigung des Fahrzeugs, Gangwechsel oder Betätigungen von Fahrzeugfunktionen, die im Falle eines tatsächlichen Crashs typischerweise nicht erfolgen können oder nicht erfolgen würden.

Der voranstehend genannte Schritt des Erkennens einer möglichen Crash-Situation kann vorzugsweise mindestens einen der folgenden Schritte umfassen:
- Erfassen von Sensordaten,
- Auswerten der erfassten Sensordaten,
- Vergleichen der erfassten oder ausgewerteten Sensordaten mit vordefinierten Schwellenwerten,
- Berechnen einer Wahrscheinlichkeit für eine mögliche Crash-Situation anhand der erfassten oder ausgewerteten Sensordaten und/oder
- einen Entscheidungsschritt für das Vorliegen einer möglichen Crash-Situation.

Vorzugsweise kann der Schritt des Erfassens von Sensordaten zum Erkennen einer möglichen Crash-Situation ein Berücksichtigen von Sensoren zu Umfeldüberwachung des Fahrzeugs umfassen. Hierzu sind bereits verschiedene Systeme, wie beispielsweise Kameras, Abstandsradar oder Abstandssensoren, bekannt. Diese erlauben eine Erfassung von potentiellen Kollisionsgegenständen bereits vor einem tatsächlichen Kontakt mit dem Fahrzeug. Fällt beispielsweise der ermittelte Abstand unter einen vorgegebenen Grenzwert, so wird eine mögliche Crash-Situation erkannt, ohne dass es bereits zu einem tatsächlichen Crash gekommen ist. Es kann somit vorbeugend bereits eine entsprechende Definition der Rückfallebene vorgenommen werden.

Des weiteren können als Sensoren auch Brems- und Stabilitätssensoren herangezogen werden, die ungewöhnliche Messwerte registrieren, beispielsweise starke Verzögerungswerte bei einem starken Bremsen des Fahrzeugs oder Beschleunigungswerte, vorzugsweise einer Quer- und Vertikalbeschleunigung des Fahrzeugs. Auch kann beispielsweise ein Auslösen des ABS oder ESP oder anderer Fahrerassistenzsysteme berücksichtigt werden.

Ebenso können mögliche Crash-Situationen aus Informationen ermittelt werden, die von anderen Fahrzeugen, von der Umwelt oder einer Infrastruktur bereitgestellt werden, also sogenannte "Car2Car"- oder "Car2lnfrastructure"-Systeme. Diese erlauben beispielsweise eine besonders vorausschauende Erkennung einer möglichen Crash-Situation.

Allgemein kann also jeder Sensor herangezogen werden, dessen Messdaten auf eine mögliche Unfallgefahr hindeuten können, so dass bereits vor einem ersten Berühren des Fahrzeugs im Rahmen einer Kollision bzw. eines Crashs das beschriebene Verfahren ausgeführt werden kann. Dies gilt selbstverständlich nicht nur für eine Erfassung vor sondern auch während des Crashs, vorzugsweise unmittelbar nach einem ersten Berühren des Fahrzeugs bis zum Erkennen des tatsächlichen Crashs durch die bekannten Systeme.

Selbstverständlich können die erfassten Sensordaten im Rahmen eines optionalen Auswerteschritts zusätzlich bearbeitet und entsprechend einem Bedarf analysiert werden, um bestmögliche Ergebnisse für eine möglichst genaue Erkennung treffen zu können.

Im Rahmen dessen können die Sensordaten, entweder die erfassten und/oder die bereits ausgewerteten Sensordaten, mit vordefinierten Schwellenwerten verglichen werden, um auf diese Weise eine Abweichung von einem normalen Betriebszustand des Fahrzeugs bzw. gefährliche Situationen (z.B. einen Überschlag oder eine Vollbremsung) zu erkennen.

Darüber hinaus kann eine Wahrscheinlichkeit für eine mögliche Crash-Situation berechnet werden. Hierzu ist jede geeignete Verknüpfung der verschiedenen Sensordaten eines Fahrzeugs möglich. Ein Beispiel hierfür ist die Bestimmung eines Abstandes zu einem erkannten Hindernis sowie die gleichzeitige Bestimmung einer Relativgeschwindigkeit hierzu. Ist diese in Anbetracht eines zu geringen Abstandes vergleichsweise hoch bzw. eine drohende Kollision möglicherweise nicht mehr abzuwenden ist, so wird eine hohe Wahrscheinlichkeit für eine drohende Kollision angenommen. Mit Hilfe der Wahrscheinlichkeitsbetrachtung können also Signale der Sensoren herangezogen werden und auf eine potentiellen Kollisionsgefahr, sprich zur Erkennung einer möglichen Crash-Situation, herangezogen und bewertet werden.

Im Rahmen des Entscheidungsschritts können die Daten und/oder die berechneten Wahrscheinlichkeiten für eine abschließende Entscheidung herangezogen werden, die zum Ergebnis hat, ob eine mögliche Crash-Situation erkannt wurde oder nicht.

Des Weiteren wird ein Steuerungssystem für eine elektronische Kraftstoffpumpe vorgeschlagen, mit
- einer Crash-Erkennungsvorrichtung und
- einer elektronischen Kraftstoffpumpe mit einer definierbaren Rückfallebene,
wobei die Crash-Erkennungsvorrichtung kommunikationstechnisch mit der elektronischen Kraftstoffpumpe verbunden ist und die Crash-Erkennungsvorrichtung zum Ausführen des beschriebenen erfindungsgemäßen Verfahrens ausgebildet ist.

Hierbei übernimmt vorzugsweise die Crash-Erkennungsvorrichtung die Schritte des Erkennens der möglichen Crash-Situation und stellt entsprechende Signale bereit. Die Crash-Erkennungsvorrichtung weist hierzu entsprechend ausgebildete Mittel auf. Wie voranstehend bereits beschrieben, kann eine Definition der Rückfallebene der Kraftstoffpumpe von dieser selbst oder ebenfalls von der Crash-Erkennungsvorrichtung durchgeführt werden.

Gemäß einer Ausführungsform des Steuerungssystems sind die Crash-Erkennungsvorrichtung und die elektronische Kraftstoffpumpe unmittelbar und/oder mittelbar kommunikationstechnisch miteinander verbunden.

Die mittelbare Kommunikation der Crash-Erkennungsvorrichtung mit der Kraftstoffpumpe kann beispielsweise über einen Fahrzeugantrieb erfolgen, so dass die Crash-Erkennungsvorrichtung eine bestehende Kommunikationsverbindungzwischen dem Fahrzeugantrieb und der elektronischen Kraftstoffpumpe, beispielsweise den CAN-Bus, zur Übermittlung seiner Signale und Informationen nutzen kann. Vorzugsweise ist das Steuerungssystem derart abgestimmt, dass eine Übertragungsgeschwindigkeit ausreichend hoch ist, um die Signale der Crash-Erkennungsvorrichtung vor einer möglichen Unterbrechung der Kommunikationsverbindung zu der Kraftstoffpumpe bereitzustellen.

Alternativ oder zusätzlich kann eine unmittelbare kommunikationstechnische Verbindung zwischen der Crash-Erkennungsvorrichtung und der Kraftstoffpumpe (eine sogenannte Punkt-zu-Punkt-Verbindung) bereitgestellt werden. Dies erlaubt eine kürzere und insgesamt schnellere Übermittlung von Signalen und Informationen, sodass im Vergleich zu der beschriebenen mittelbaren Ausgestaltung Bus- bzw. architekturspezifische Latenzzeiten deutlich verringert werden können. Es kann somit eine noch schnellere und sicherere Definition der Rückfallebene der Kraftstoffpumpe erfolgen, noch bevor Kraftstoffleitungen oder Kommunikationsverbindungen beschädigt werden.

Gemäß einer weiteren Ausführungsform kann die kommunikationstechnische Verbindung zwischen Crash-Erkennungsvorrichtung und der elektronischen Kraftstoffpumpe unidirektional und/oder bidirektional ausgebildet werden.

Bei einer unidirektionalen Verbindung erfolgt ein Austausch von Signalen und Informationen lediglich in einer Richtung, vorzugsweise von der Crash-Erkennungsvorrichtung zu der Kraftstoffpumpe. Alternativ oder zusätzlich kann aber auch eine bidirektionale Verbindung vorgesehen werden. Diese ermöglicht eine Kommunikation in beide Richtungen, also von der Crash-Erkennungsvorrichtung zu der Kraftstoffpumpe und in Gegenrichtung. Dies bietet den zusätzlichen Vorteil, dass eine Qualität und eine Verfügbarkeit der kommunikationstechnischen Verbindung sichergestellt und überwacht werden kann. Beide Ausführungsformen der kommunikationstechnischen Verbindung sind sowohl für eine mittelbare als auch für die unmittelbare Verbindung möglich.

Wie ebenfalls bereits beschrieben, wird für die Erkennung einer möglichen Crash-Situation auf Sensoren zurückgegriffen. Hierzu ist die Crash-Erkennungsvorrichtung kommunikationstechnisch mit Sensoren zum Erkennen der Crash-Situation kommunikationstechnisch verbunden.

Die Crash-Erkennungsvorrichtung kann hierzu eigene Sensoren umfassen oder auf entsprechende Sensoren des Fahrzeugs zurückgreifen, um das beschrieben Verfahren auszuführen.

Die Erfindung wird nachfolgend unter Bezugnahme auf die beigefügten Zeichnungen anhand mehrerer Ausführungsbeispiele beschrieben. In diesen zeigen:
Fig. 1 eine erste Ausführungsform einer aus dem Stand der Technik bekannten Anordnung eines Crash-Erkennungssystems,
Fig. 2 eine zweite Ausführungsform einer aus dem Stand der Technik bekannten Anordnung eines Crash-Erkennungssystems,
Fig. 3 eine erste Ausführungsform einer Anordnung einer erfindungsgemäßen Crash-Erkennungsvorrichtung,
Fig. 4 eine zweite Ausführungsform einer Anordnung einer erfindungsgemäßen Crash-Erkennungsvorrichtung,
Fig. 5 ein Ablaufdiagramm für eine Ansteuerung einer Kraftstoffpumpe gemäß dem Stand der Technik,
Fig. 6 ein Ablaufdiagramm für eine erfindungsgemäße Ansteuerung einer Kraftstoffpumpe, und
Fig. 7 ein Flussdiagramm für eine erfindungsgemäße Ansteuerung einer Kraftstoffpumpe.

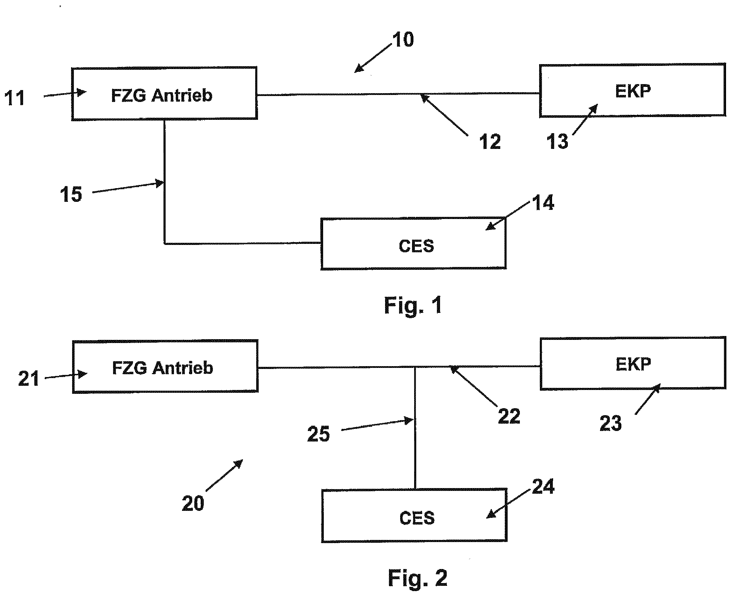

Fig. 1 zeigt eine erste Ausführungsform einer aus dem Stand der Technik bekannten Anordnung 10 eines Crasherkennungssystems. Diese umfasst einen Fahrzeugantrieb 11 (kurz: "FZG Antrieb"), der über ein BUS-System 12 mit einer elektronischen Kraftstoffpumpe 13 kommunikationstechnisch verbunden ist. Üblicherweise werden über diese Verbindung Informationen zu einem aktuellen Kraftstoffmengenbedarf gesendet, so dass die Kraftstoffpumpe entsprechend geregelt werden kann. Des Weiteren ist ein Crash-Erkennungssystem 14 (kurz: "CES") über eine weitere Verbindung 15 mit dem Fahrzeugantrieb 11 gekoppelt. Auch diese weitere Verbindung 15 kann Teil des BUS-Systems 12 oder eines zweiten BUS-Systems sein und dient zur Übertragung von Signalen des Crash-Erkennungssystems 14 an den Fahrzeugantrieb 11. Auf diesem Wege kann ein Signal über einen erkannten Crash des Fahrzeugs an den Fahrzeugantrieb 11 übertragen und dieser in Reaktion hierauf abgeschaltet werden. Des Weiteren wird üblicherweise ein Signal zur Abschaltung der Kraftstoffpumpe 13 von dem Fahrzeugantrieb 11 an die Kraftstoffpumpe 11 gesendet.

Fig. 2 zeigt eine zweite Ausführungsform einer aus dem Stand der Technik bekannten Anordnung 20 eines Crasherkennungssystems. Dieses umfasst entsprechend der Anordnung aus Fig. 1 einen Fahrzeugantrieb 21 und eine über ein BUS-System kommunikationstechnisch verbundene elektronische Kraftstoffpumpe 23. Im Gegensatz zu der in Fig. 1 beschriebenen Ausführungsform, ist ein Crash-Erkennungssystem 24 direkt mit dem BUS-System 22 gekoppelt, so dass das Crash-Erkennungssystem 24 Signale über einen Crash direkt an die Kraftstoffpumpe 23 zur Abschaltung und ebenso direkt an den Fahrzeugantrieb 21 senden kann.

In beiden Anordnungen 10 und 20 wird gemäß dem Stand der Technik zuerst eine tatsächliche Erkennung eines tatsächlich vorliegenden Crashs des Fahrzeugs vorausgesetzt. Diese Erkennung eines Crashs stellt üblicherweise keine einfache binäre Entscheidung dar. Vielmehr bauen sich Belastungen und Verzögerungen erst im Laufe der Zeit auf. Dies hat zur Folge, dass eine Crash-Erkennung erst im Verlauf einer bereits stattfindenden Fahrzeugdeformierung erfolgt. Hierbei besteht jedoch die Gefahr, dass bereits der Fahrzeugantrieb 11 oder das BUS-System 12, 22 derart beschädigt werden, dass eine (Weiter-) Leitung eines Signals zur Crashbedingten Abschaltung der Kraftstoffpumpe 13, 23 unmöglich wird. In diesem Fall bemerkt die Kraftstoffpumpe 13,23 von dem Crash nichts und bleibt in Betrieb. Vielmehr erkennt die Kraftstoffpumpe eine fehlende Information zu einem aktuellen Kraftstoffbedarf und greift daher auf einen als Rückfallebene definierten Fördermengenwert zurück, der für einen Ausfall der Verbindung zu dem Fahrzeugantrieb vorgesehen, jedoch nicht für einen Crash-Fall ausgelegt ist. Dies hat zur Folge, dass die Kraftstoffpumpe im Falle eines Crashs nicht abgeschaltet wird, sondern entsprechend dem Fördermengenwert Kraftstoff fördert und eine Brandgefahr am Unfallort signifikant erhöht.

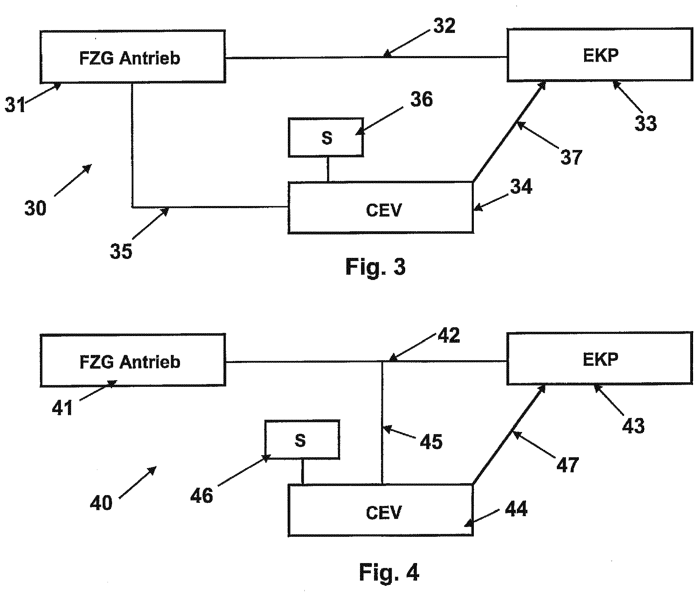

Fig. 3 zeigt eine erste Ausführungsform einer Anordnung 30 einer erfindungsgemäßen Crash-Erkennungsvorrichtung 34. Diese ist entsprechend dem Stand der Technik nach Fig. 1 über einen Fahrzeugantrieb 31 mittels einem BUS-System 32 bzw. einem weiteren BUS-System 35 mit einer elektronischen Kraftstoffpumpe 33 kommunikationstechnisch verbunden.

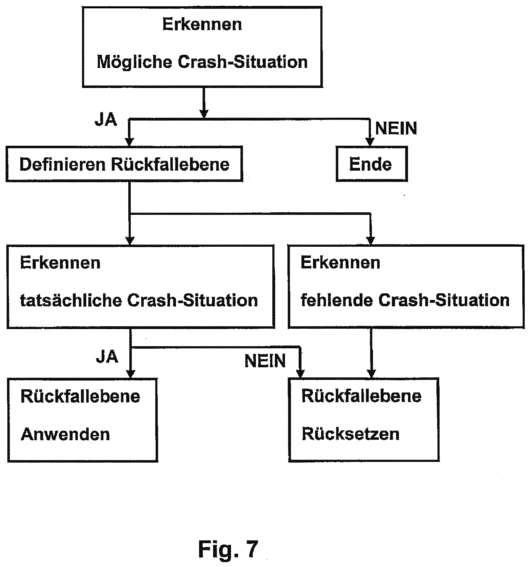

Im Gegensatz zu dem Stand der Technik ist jedoch eine erfindungsgemäße Crash-Erkennungsvorrichtung 34 abweichend von einem bekannten Crash-Erkennungssystem 14, 24 ausgebildet. Über kommunikationstechnisch verbundene Sensoren 36 kann die Crash-Erkennungsvorrichtung 34 bereits vor einem Erkennen eines tatsächlichen Crashs einen möglichen Crash "vorhersehen" bzw. zumindest so frühzeitig wahrnehmen, dass ein entsprechendes Signal bereits zu der Krafttoffpumpe 33 gesendet und dort empfangen werden kann, bevor eine Crash-bedingte Zerstörung eine Verbindung zu der Kraftstoffpumpe unterbrechen kann. Ein weiterer Unterschied liegt darin begründet, dass das entsprechende Signal nicht eine unmittelbare Abschaltung der Kraftstoffpumpe bewirkt. Vielmehr wird aufgrund des Signals ein Fördermengenwert einer Rückfallebene der Kraftstoffpumpe wunschgemäß definiert. Angaben zu einem genauen Ablauf des zugrundeliegenden Verfahrens sind in einem Flussdiagramm in Fig. 7 dargestellt.

Um eine noch schnellere Verbindung zu der Kraftstoffpumpe 33 bereitzustellen, kann die Crash-Erkennungsvorrichtung 34 optional unmittelbar über eine Verbindung 37 mit der Kraftstoffpumpe verbunden sein, so dass das Signal auf direktem und schnellem Wege die Kraftstoffpumpe 33 erreichen kann.

Fig. 4 zeigt eine zweite Ausführungsform einer Anordnung 40 einer erfindungsgemäßen Crash-Erkennungsvorrichtung 40. Diese unterscheidet sich insbesondere durch eine direkte Anbindung 45 der Crash-Erkennungsvorrichtung 44 an ein BUS-System 42, welches einen Fahrzeugantrieb 41 mit einer elektronischen Kraftstoffpumpe 43 verbindet.

Analog zu der Anordnung 30 aus Fig. 3 ist die Crash-Erkennungsvorrichtung 44 mit Sensoren 46 des Fahrzeugs zum Erkennen einer möglichen Crash-Situation und über eine direkte Verbindung 47 mit der Kraftstoffpumpe 43 verbunden.

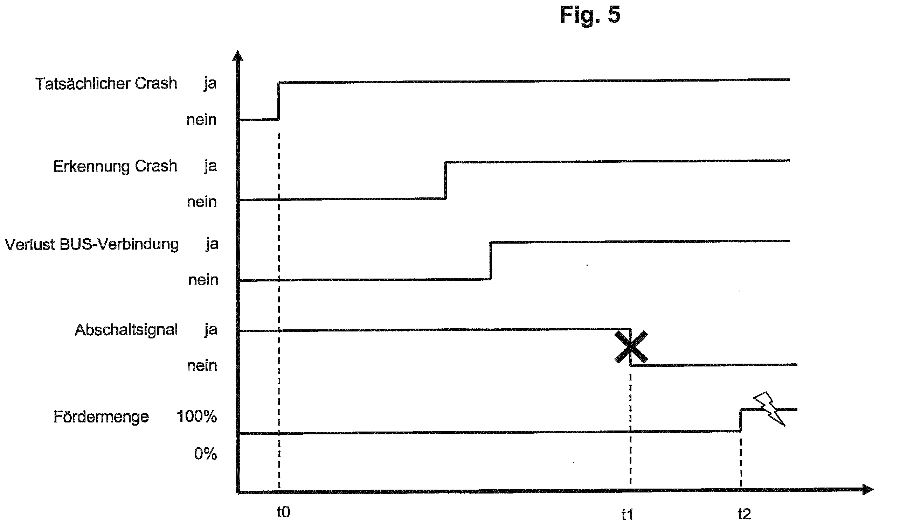

Fig. 5 zeigt ein Ablaufdiagramm für eine Ansteuerung einer Kraftstoffpumpe gemäß dem Stand der Technik. Zu einem Zeitpunkt t0 findet demnach ein tatsächlicher physischer Crash statt. Anschließend erfolgt mit einiger zeitlicher Verzögerung eine Erkennung des Crashs mit einem kurz darauf folgenden Verlust einer BUS-Verbindung der elektronischen Kraftstoffpumpe. Dies hat zur Folge, dass ein Signal zur Abschaltung der elektronischen Kraftstoffpumpe in Reaktion auf die Crash-Erkennung kurz darauf versendet wird, dieses jedoch aufgrund des Verlustes der BUS-Verbindung nicht von der Kraftstoffpumpe empfangen werden kann. Stattdessen erkennt die Kraftstoffpumpe, dass ein Signal zur Bestimmung einer aktuellen Fördermenge nicht mehr bereitgestellt wird (t1), so dass auf einen in der Kraftstoffpumpe hinterlegten Fördermengenwert als Rückfallebene zurückgegriffen wird (t2). In der dargestellten Ausführungsform wird die Fördermenge von einem Betriebszustand (Fördermenge zwischen 0 und 100% eines Kraftstoffbedarfs) auf eine maximale Fördermenge (100% des Bedarfs) gesteigert, um einen unbeabsichtigten Ausfall des Fahrzeugs zu verhindern. Dies führt jedoch im Falle eines Crashs mit einem Leck zur Erhöhung eines Gefahrensituation und einer akuten Brandgefahr.

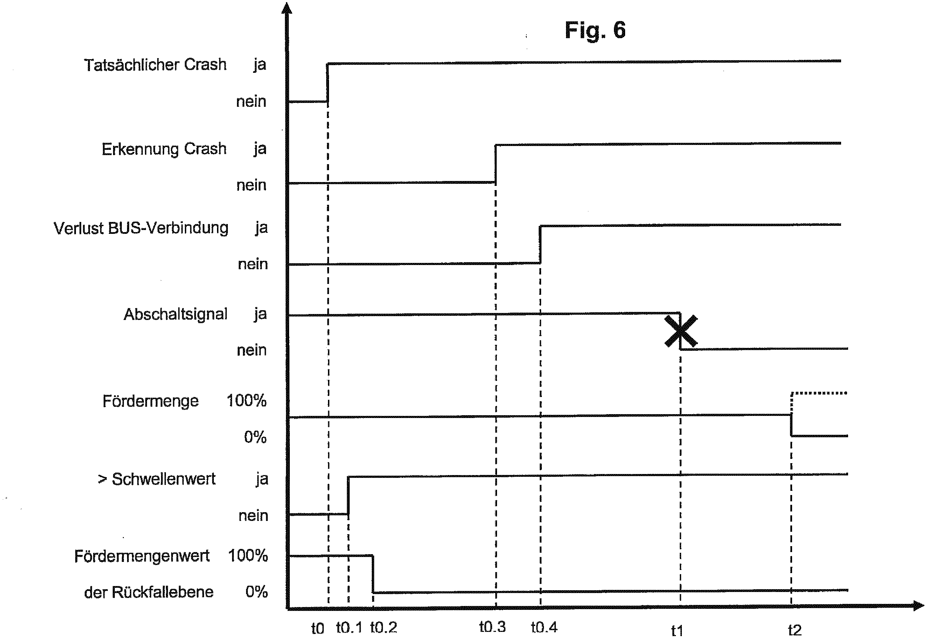

Fig. 6 zeigt ein Ablaufdiagramm für eine erfindungsgemäße Ansteuerung einer Kraftstoffpumpe. Entsprechend findet auch hier ein tatsächlicher Crash zu einem Zeitpunkt t0 statt. Dies führt dazu, dass bereits nach kurzer Zeit ein Sensor eine Beschleunigung erfasst (t0.1), die einen definierten Schwellenwert überschreitet. In Reaktion auf diesen Messwert wird unmittelbar anschließend eine Rückfallebene der elektronischen Kraftstoffpumpe definiert (t0.2). Ein dort hinterlegter Fördermengenwert wird von ursprünglichen 100% (für eine maximale Ausfallsicherheit des Fahrzeugs) auf 0% gesetzt.

Eine zeitlich nachfolgende Crash-Erkennung (t0.3) und ein Verlust der BUS-Verbindung (t0.4) zu der Kraftstoffpumpe bleiben ohne negative Folgen, da eine Definition der Rückfallebene bereits erfolgt ist. Ein Abschaltsignal an die Kraftstoffpumpe wird aufgrund der verlorenen BUS-Verbindung ebenfalls nicht von der Kraftstoffpumpe empfangen (t1). Die Kraftstoffpumpe greift anschießend aufgrund einer fehlenden Vorgabe neuer Fördermengenwerte auf den in der Rückfallebene vorgegebenen Fördermengenwert zurück und setzt die aktuelle Fördermenge entsprechend auf 0% zurück (t2), was faktisch einer Abschaltung der Kraftstoffpumpe gleichkommt und eine Brandgefahr reduziert.

Gestrichelt dargestellt ist lediglich zu Vergleichszwecken der Verlauf der Fördermenge für den in Fig. 5 dargestellten Fall ohne eine erfindungsgemäße Vorkonditionierung durch Definition der Rückfallebene.

Dieser würde in gegenteiliger Weise, wie in Fig. 5 beschrieben, die Fördermenge erhöhen und eine Brandgefahr fördern.

Fig. 7 zeigt ein Flussdiagramm für eine erste Ausführungsform eines erfindungsgemäßen Ansteuerungsverfahrens für eine Kraftstoffpumpe. Das Verfahren umfasst ein Erkennen einer möglichen Crash-Situation. Der Schritt des Erkennens kann insbesondere einen der nicht dargestellten Unterschritte eines Erfassens von Sensordaten, ein Auswerten von Sensordaten, insbesondere der erfassten Sensordaten, einen Vergleich der erfassten und/oder der ausgewerteten Sensordaten und das Berechnen einer Wahrscheinlichkeit aufgrund der Sensordaten sowie einen anschließenden Entscheidungsschritt umfassen. Wird eine mögliche Crash-Situation als vorliegend erkannt, so folgt ein Definieren einer Rückfallebene der Kraftstoffpumpe durch Hinterlegen eines Fördermengenwertes, wobei der hinterlegte Fördermengenwert einer Schließstellung der Kraftstoffpumpe zugeordnet ist.

Wird anschließend durch Erkennen einer tatsächlichen Crash-Situation bestätigt, dass es tatsächlich zu einem Crash gekommen ist, so wird die Rückfallebene bzw. der hinterlegte Fördermengenwert angewendet und die entsprechende Fördermenge eingestellt. Aufgrund der Zuordnung zu der Schließstellung ist somit die Kraftstoffpumpe geschlossen und ein Betrieb faktisch eingestellt.

Wird dagegen keine tatsächliche Crash-Situation erkannt, so wird die Rückfallebene wieder zurückgesetzt. Dies bedeutet, dass der hinterlegte Fördermengenwert durch einen zweiten Fördermengenwert ersetzt wird, welcher einer geöffneten Stellung der Kraftstoffpumpe zugeordnet ist und einen definierten Betriebszustand mit einer bestimmten Fördermenge beschreibt, um eine Ausfallsicherheit des Fahrzeugs sicherzustellen. Eine Entscheidung, dass keine Erkennung eines Crashs vorliegt, kann beispielsweise nach ereignislosem Ablauf einer vordefinierten Zeitdauer erfolgen.

Alternativ oder zusätzlich kann ein Schritt des Erkennens einer fehlenden Crash-Situation vorliegen. Dies kann beispielsweise der Fall sein, wenn ein Betrieb oder ein Betriebszustand des Fahrzeugs erkannt wird, welcher typischerweise nach einem tatsächlichen Crash nicht möglich wäre. Auch in diesem Fall wird die Rückfallebene entsprechend zurückgesetzt.

## Patentansprüche

1. Verfahren zum schnellen und sicheren Ansteuern einer elektronischen Kraftstoffpumpe (33,43) mit einer definierbaren Rückfallebene für eine Fördermenge der Kraftstoffpumpe, mit den folgenden Schritten:
- Erkennen einer möglichen Crash-Situation mittels einer Crash-Erkennungsvorrichtung (34,44),
**gekennzeichnet durch den folgenden Schritt:**
- Definieren der Rückfallebene der Kraftstoffpumpe (33,43) auf einen ersten Fördermengenwert in Vorbereitung auf einen nachfolgenden tatsächlichen Crash durch Hinterlegen des ersten Fördermengenwertes in der elektronischen Kraftstoffpumpe (33,43) in Reaktion auf die erkannte mögliche Crash-Situation, wobei der erste Fördermengenwert einer Schließstellung der Kraftstoffpumpe (33,43) zugeordnet ist,.

2. Verfahren nach Anspruch 1, wobei das Verfahren außerdem die folgenden Schritte umfasst:
- Erkennen einer tatsächlichen Crash-Situation,
- Anwenden des als Rückfallebene definierten Fördermengenwertes zum Schließen der Kraftstoffpumpe (33,43) in Reaktion auf die tatsächlich erkannte Crash-Situation.

3. Verfahren nach Anspruch 1, wobei das Verfahren außerdem die folgenden Schritte umfasst:
- Erkennen einer fehlenden Crash-Situation nach Ablauf eines definierten Zeitintervalls,
- Definieren der Rückfallebene auf einen zweiten Fördermengenwert, der einer Öffnungsstellung der Kraftstoffpumpe (33,43) zugeordnet ist.

4. Verfahren nach Anspruch 1 oder 3, wobei das Verfahren außerdem die folgenden Schritte umfasst:
- Erkennen einer fehlenden Crash-Situation anhand einer Auswertung von Sensordaten,
- Definieren der Rückfallebene auf einen zweiten Fördermengenwert, der einer Öffnungsstellung der Kraftstoffpumpe (33,43) zugeordnet ist.

5. Verfahren nach einem der Ansprüche 1 bis 4, wobei der Schritt des Erkennens einer möglichen Crash-Situation mindestens einen der folgenden Schritte umfasst:
- Erfassen von Sensordaten,
- Auswerten der erfassten Sensordaten,
- Vergleichen der erfassten oder ausgewerteten Sensordaten mit vordefinierten Schwellenwerten,
- Berechnen einer Wahrscheinlichkeit für eine mögliche Crash-Situation anhand der erfassten oder ausgewerteten Sensordaten und/oder
- einen Entscheidungsschritt für das Vorliegen einer möglichen Crash-Situation.

6. Steuerungssystem für eine elektronische Kraftstoffpumpe (33,43) mit
- einer Crash-Erkennungsvorrichtung (34,44) und
- einer elektronischen Kraftstoffpumpe (33,43) mit einer definierbaren Rückfallebene,
wobei die Crash-Erkennungsvorrichtung (34,44) kommunikationstechnisch mit der elektronischen Kraftstoffpumpe (33,43) verbunden ist, **dadurch gekennzeichnet**, dassdas Steuerungssystem zum Ausführen des Verfahrens nach einem der Ansprüche 1 bis 5 konfiguriert ist.

7. Steuerungssystem nach Anspruch 6, wobei die Crash-Erkennungsvorrichtung (34,44) und die elektronische Kraftstoffpumpe (33,43) unmittelbar (37,47,42,45) und/oder mittelbar (32,35) kommunikationstechnisch miteinander verbunden sind.

8. Steuerungssystem nach Anspruch 6 oder 7, wobei die kommunikationstechnische Verbindung (32,35,37,42,45,47) zwischen Crash-Erkennungsvorrichtung (34,44) und der elektronischen Kraftstoffpumpe (33,43) unidirektional und/oder bidirektional ausgebildet ist.

9. Steuerungssystem nach einem der Ansprüche 6 bis 8, wobei die Crash-Erkennungsvorrichtung (34,44) mit Sensoren (36,46) zum Erkennen der Crash-Situation kommunikationstechnisch verbunden ist.

## Claims

1. A method for the rapid and safe actuation of an electronic fuel pump (33, 43) with a definable fallback level for a delivery volume of the fuel pump, having the following steps:
- recognising a possible crash situation by means of a crash recognition device (34, 44),
**characterised by the following step:**
- defining the fallback level of the fuel pump (33, 43) at a first delivery volume value in preparation for a subsequent actual crash by storing the first delivery volume value in the electronic fuel pump (33, 43) in reaction to the recognised possible crash situation, wherein the first delivery volume value is associated with a closed position of the fuel pump (33, 43).

2. A method according to Claim 1, wherein the method furthermore comprises the following steps:
- recognising an actual crash situation,
- applying the delivery volume value defined as fallback level for closing the fuel pump (33, 43) in reaction to the crash situation actually recognised.

3. A method according to Claim 1, wherein the method furthermore comprises the following steps:
- recognising the lack of a crash situation once a defined time interval has elapsed,
- defining the fallback level at a second delivery volume value which is associated with an opening position of the fuel pump (33, 43).

4. A method according to Claim 1 or Claim 3, wherein the method furthermore comprises the following steps:
- recognising the lack of a crash situation by means of an evaluation of sensor data,
- defining the fallback level at a second delivery volume value which is associated with an opening position of the fuel pump (33, 43).

5. A method according to one of Claims 1 to 4, wherein the step of recognising a possible crash situation comprises at least one of the following steps:
- detecting sensor data,
- evaluating the detected sensor data,
- comparing the detected or evaluated sensor data with predefined threshold values,
- calculating a probability of a possible crash situation using the detected or evaluated sensor data, and/or
- a decision step for the presence of a possible crash situation.

6. A control system for an electronic fuel pump (33, 43), with
- a crash recognition device (34, 44) and
- an electronic fuel pump (33, 43) with a definable fallback level,
wherein the crash recognition device (34, 44) is connected communication-wise to the electronic fuel pump (33, 43), **characterised in that** the control system is configured to carry out the method according to one of Claims 1 to 5.

7. A control system according to Claim 6, wherein the crash recognition device (34, 44) and the electronic fuel pump (33, 43) are connected together communication-wise directly (37, 47, 42, 45) and/or indirectly (32, 35).

8. A control system according to Claim 6 or Claim 7, wherein the communication-wise connection (32, 35, 37, 42, 45, 47) between the crash recognition device (34, 44) and the electronic fuel pump (33, 43) is designed to be unidirectional and/or bidirectional.

9. A control system according to one of Claims 6 to 8, wherein the crash recognition device (34, 44) is connected communication-wise to sensors (36, 46) for recognising the crash situation.

## Revendications

1. Procédé de commande rapide et sûre d'une pompe de carburant électronique (33, 43) ayant un plan de secours définissable pour le débit de la pompe de carburant comprenant l'étape suivante consistant à :
- identifier une situation d'accident possible au moyen d'un dispositif d'identification d'accident (34, 44),
**caractérisé par** les étapes suivantes consistant à :
- définir le plan de secours de la pompe de carburant (33, 43) sur une première valeur de débit en préparation d'un accident réel suivant en déposant la première valeur de débit dans la pompe de carburant électronique (33, 43) en réaction de la situation d'accident possible identifiée, la première valeur de débit étant associée à la position de fermeture de la pompe de carburant (33, 43).

2. Procédé conforme à la revendication 1,
comprenant en outre les étapes suivantes consistant à :
- identifier une situation d'accident réelle,
- utiliser la valeur de débit définie en tant que plan de secours pour fermer la pompe de carburant (33, 43) en réaction à la situation d'accident réellement identifiée.

3. Procédé conforme à la revendication 1,
comprenant en outre les étapes suivantes consistant à :
- identifier l'absence d'une situation d'accident après l'écoulement d'une durée définie,
- définir le plan de secours sur une seconde valeur de débit qui est associée à la position d'ouverture de la pompe de carburant (33, 43).

4. Procédé conforme à la revendication 1 ou 3,
comprenant en outre les étapes suivantes consistant à :
- identifier l'absence d'une situation d'accident à partir de l'évaluation de données de capteur,
- définir le plan de secours sur une seconde valeur de débit qui est associée à la position d'ouverture de la pompe de carburant (33, 43).

5. Procédé conforme à l'une des revendications 1 à 4,
selon lequel l'étape consistant à identifier une situation d'accident possible comprend au moins l'une des étapes suivantes consistant à :
- détecter des données de capteur,
- évaluer les données de capteur détectées,
- comparer les données de capteur détectées ou évaluées avec des valeurs de seuil prédéfinies,
- calculer la probabilité d'une situation d'accident possible à partir des données de capteur détectées ou évaluées, et/ou
- une étape de décision concernant la présence d'une situation d'accident possible.

6. Système de commande d'une pompe de carburant électronique (33, 43) comprenant :
- un dispositif d'identification d'accident (34, 44), et
- une pompe de carburant électronique (33, 43) ayant un plan de secours pouvant être prédéfini,
le dispositif d'identification d'accident (34, 44) étant relié par la technique de communication avec la pompe de carburant électronique, **caractérisé en ce que**, le système de commande est réalisé pour permettre la mise en oeuvre du procédé conforme à l'une des revendications 1 à 5.

7. Système de commande conforme à la revendication 6,
dans lequel le dispositif d'identification d'accident (34, 44) et la pompe de carburant électronique (33, 43) sont reliés par la technique de communication, ce directement (37, 47, 42, 45) et/ou indirectement (32, 35).

8. Système de commande conforme à la revendication 6 ou 7,
dans lequel la liaison par la technique de communication (32, 35, 37, 42, 45, 47) entre le dispositif d'identification d'accident (34, 44) et la pompe de carburant électronique (33, 43) est réalisée de façon unidirectionnelle et/ou bidirectionnelle.

9. Système de commande conforme à l'une des revendications 6 à 8,
dans lequel le dispositif d'identification d'accident (34, 44) est relié par la technique de communication à des capteurs (36, 46) pour permettre d'identifier la situation d'accident.
